(19) Europäisches Patentamt
European Patent Office
Office européen des brevets

(11) **EP 1 347 287 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.⁷: $G01N\ 23/20$, $G01V\ 5/00$

(21) Anmeldenummer: **02004153.9**

(22) Anmeldetag: **26.02.2002**

(54) **Simultan-Multifokus kohärente Röntgenstreuung (CXRS)**

Simultaneous multi-focus coherent X-ray scattering (CXRS)

Diffusion cohérente de rayons X avec multifocalisation simultanée (CXRS)

(84) Benannte Vertragsstaaten:
**DE FR GB**

(43) Veröffentlichungstag der Anmeldung:
**24.09.2003 Patentblatt 2003/39**

(73) Patentinhaber: **YXLON International Security GmbH**
**22419 Hamburg (DE)**

(72) Erfinder: **Harding,Geoffrey,Prof.dr.**
**22457 Hamburg (DE)**

(74) Vertreter: **Schnekenbühl, Robert Matthias L.**
**DTS München Patent-**
**und Rechtsanwälte**
**St.-Anna-Strasse 15**
**80538 München (DE)**

(56) Entgegenhaltungen:
**US-A- 3 777 148**  **US-A- 4 264 824**
**US-A- 4 597 096**

• **HARDING G ET AL: "Coherent X-ray scatter imaging and its applications in biomedical science and industry" RADIATION PHYSICS AND CHEMISTRY, ELSEVIER SCIENCE PUBLISHERS BV., AMSTERDAM, NL, Bd. 56, Nr. 1-2, 11. August 1999 (1999-08-11), Seiten 229-245, XP004179936 ISSN: 0969-806X**

**Beschreibung**

Die Erfindung betrifft eine Anordnung zum Messen des Impulsübertragungsspektrums von in einem Untersuchungsbereich für Behältnisse elastisch gestreuten Röntgenquanten nach dem Oberbegriff des Anspruches 1.

Derartige Anordnungen sind beispielsweise aus der EP-B1-360 347 und der EP-A1-0 556 887 bekannt geworden.

In einer älteren, nicht veröffentlichten EP-Anmeldung 11 06 227.0 wurde eine solche Anordnung, die auf dem Prinzip der Untersuchungen mit kohärenten Streustrahlen (Coherent X-Ray Scanning, CXRS) basiert, beschrieben, die einen Multifokusröntgenstrahler besitzt, welcher eine Anordnung von "foci" besitzt, die jeweils aufeinanderfolgend mittels Elektronik adressiert werden müssen, um einen 2-D Abschnitt eines Behältnisses oder Gepäckstückes vollständig abzutasten. Hierzu muß die Röntgenleistung der unterschiedlichen Foci gesteuert werden, was einen relativ großen elektronischen Aufwand erforderte. Ein weiterer Nachteil liegt darin, daß nur ein Fokus jeweils aktiv ist, was die Meßzeit verlängert.

Der Erfindung liegt deshalb die Aufgabe zugrunde, die elektronische Steuerung der Position des Fokus überflüssig zu machen, um die Hochspannungs-Elektronik insgesamt zu vereinfachen und die Abtastgeschwindigkeit weiter zu erhöhen oder bei konstanter/beibehaltener Meßgeschwindigkeit die Erfassungsqualität zu verbessern, um die Gefahr, gesuchte Gegenstände im Behältnis zu übersehen, zu reduzieren.

Diese Aufgabe wird durch die im Anspruch 1 gekennzeichnete Anordnung gelöst.

Erfindungsgemäß wird zwischen dem Behältnis und dem Detektor ein konvergierender 2-D-Multikanal-Streukollimator oder eine Sekundärblendenanordnung vorgesehen, der bzw. die die Y- und X-Koordinaten des Streuvoxels im Behältnis auf die Y- und Z-Dimensionen des Detektors kodiert. Die Streustrahlen aus unterschiedlichen Tiefen (X-Richtung) im Behältnis werden auf die Z-Dimension des Detektors kodiert und gleichzeitig werden die Streustrahlen aus unterschiedlichen Fokuspositionen (Y-Richtung) an der Röntgenstrahlungsquelle auf die Y-Dimension des Detektors kodiert. Hierzu umfaßt die Detektoranordnung eine pixelartige Segmentierung, die typischerweise 16 bzw. 32 x 14 Segmente umfassen kann.

Auf diese Weise ist es unnötig, elektronisch die Position des Fokus zu steuern. Tatsächlich kann die gesamte, vorteilhafterweise gekühlte Anode oder Teile davon gleichzeitig Strahlen abgeben, was zu einer beträchtlichen Vereinfachung der Elektrode und zu einer Verbesserung der Meßgeschwindigkeit führt, d.h. einer bedeutenden Verringerung der Abtastzeit. Außerdem wird die Gesamtlänge der erfindungsgemäßen Anordnung verringert, die dadurch raumsparender wird.

Die Ausgangssignale der Detektorelemente können bekanntermaßen so verarbeitet werden, wie es insbesondere in der deutschen Patentanmeldung P 41 01 544.4 beschrieben ist. Es sei lediglich erwähnt, daß für jedes Detektorelement ein Verarbeitungskanal vorgesehen ist, in dem das Signal verstärkt, digitalisiert und einem Impulshöhenanalysator zugeführt wird, der die Zahl der Röntgenquanten in den verschiedenen Energiebereichen registriert. Für jedes Detektorelement und für jeden Energiebereich wird diese Zahl durch die Zahl der Röntgenquanten dividiert, die mit Hilfe des zentralen Detektorelements $D_0$ für den betreffenden Energiebereich registriert worden sind. Daraus ergibt sich für jedes Detektorelement das Energiespektrum, und zwar unabhängig von der Energieverteilung der von dem Röntgenstrahler emittierten Röntgenquanten und weitgehend unabhängig von der Schwächung der Streustrahlung durch das Objekt.

Im folgenden wird die Erfindung anhand verschiedener Ausführungsformen und Aspekte zum besseren Verständnis anhand der Zeichnung näher beschrieben, worauf die Erfindung jedoch nicht beschränkt ist.

Es zeigt:

Fig. 1    eine schematischer Querschnitt des Abtastprinzips der erfindungsgemäßen simultanen Multifokus-CXRS-Anordnung in der X,Y-Ebene,

Fig. 2    eine schematische, geometrische Darstellung der in Fig. 1 gezeigten Anordnung in der X,Z-Ebene,

Fig. 3    eine schematische Darstellung der Voxelform und - verteilung für die vier Segmente enthaltende erfindungsgemäßen simultane Multifokus CXRS-Anordnung,

Fig. 4    eine schematische Darstellung der Voxelform und - verteilung für die 32 Segmente enthaltende erfindungsgemäße Simultane Multifokus CXRS-Anordnung,

Fig. 5    eine graphische Darstellung der effektiven Dicke des Streukollimators (nur auf der X-Achse) zur Auswahl des Röntgenstrahlersegmentes (Winkel in Grad auf der X-Achse), und

Fig. 6    eine schematische Darstellung der Segmentierung der erfindungsgemäß eingesetzten Detektoranordnung in der Y,Z-Ebene mit Maßangabe in mm.

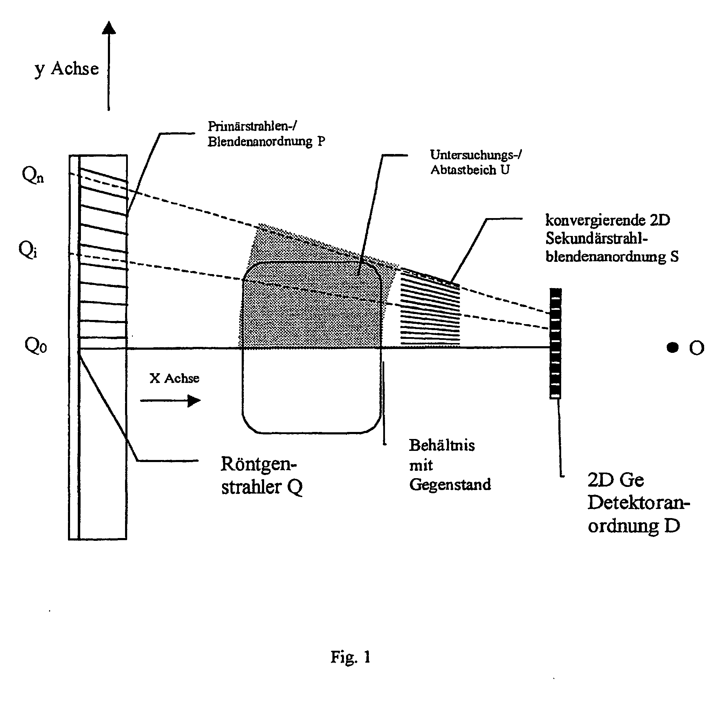

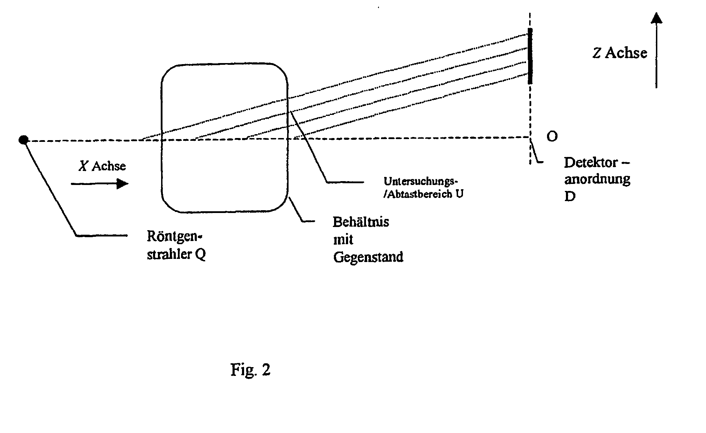

Aus Fig. 1 ist ersichtlich, daß die erfindungsgemäße Anordnung hinsichtlich des Primärkollimators P identisch mit der älteren Anordnung ist. Alle von der Strahlenquelle Q emittierten Strahlen konvergieren wie zuvor in dem Punkt O, der nunmehr jedoch nicht mehr physikalisch vorhanden ist. Ein Multikanal-Streukollimator ist zwischen dem Objekt im Untersuchungsbereich U und der Detektoranordnung D in einer Weise angeordnet, daß die gestreuten Strahlen aus unterschiedlichen Schichten (X-Richtung) des Objekts auf unterschiedliche Elemente der Detektoranordnung D in Z-Richtung abgebildet werden. Gleichzeitig werden die Streustrahlen, die zu unterschiedlichen Fokuspositionen (Y-Richtung) der Strahlenquelle/Röntgenstrahler Q gehören auf unterschiedliche Bereiche der Detektoranordnung D in Y-Richtung abgebildet. Die Detektoranordnung D hat erfindungsgemäß eine zwei-dimensionale Segmentierung (s. u.). Die Kodierung der Tiefeninformation in der Z-Richtung ist möglich, da die gestreuten Strahlen unter einem konstanten Streuwinkel, θ, erfaßt werden. Dieses ist in Fig. 2 dargestellt. Die Abbildung wird durch folgende Beziehung beschrieben:

$$Z_{det} = \frac{\tan(\theta)}{(Q_0X_{det} - Q_0S)} \tag{1}$$

In Gleichung 1 ist $Z_{det}$ der Abstand der Scan-Ebene von dem Detektorsegment, das Streustrahlung unter dem Winkel θ von einem im Abstand $Q_0S$ von der Quelle entfernten Streupunkt empfängt, wobei der Abstand der Detektoranordnung D von der Quelle $Q_0X_{det}$ beträgt. Die Abbildung der Fokusposition auf die Y-Richtung der Detektoranordnung D ist aufgrund der Anordnung des Primärkollimators P zulässig, der nur Strahlung aussendet, die im Punkt O konvergiert, in Kombination mit dem Streukollimator, der ebenfalls den Punkt O als Fokusposition besitzt. Die Abbildungsrelation zwischen der Y Koordinate der Fokusposition, $F_{source}Y$ und der Y Richtung des Detektors, $Y_{det}$, ist:

$$F_{source}Y = Y_{det} \frac{Q_0O}{(Q_0O - Q_0X_{det})} \tag{2}$$

Die Symbole haben die gleiche Bedeutung wie in Gleichung 1 mit Ausnahme von $Q_0O$ welches den Abstand der Detektoranordnung D entlang der x-Achse von der Ebene bildet, in der sich die Röntgenstrahlerquelle Q befindet.

Erfindungsgemäß ist es nun möglich, den Bereich der Strahlenquelle Q, der für die Erzeugung eines gewissen Streusignals erforderlich ist, zu identifizieren, da es nun eine eindeutige Beziehung zwischen dem Bereich der Strahlenquelle und der y-Koordinate der Detektoranordnung D gibt, wie in Gl. 2 beschrieben.

Nachdem das Grundprinzip der erfindungsgemäßen Simultan-Mutlifokus CXRS-Anordnung nunmehr beschrieben ist, werden im folgenden die erfindungsgemäßen Merkmale und einzelnen Bestandteile dieser Anordnung diskutiert, auf die die Erfindung nicht eingeschränkt ist.

Die Strahlenquelle bzw. der Röntgenstrahler Q profitiert unmittelbar von der Simultan-Multifokus CXRS-Anordnung, da es nun nicht mehr erforderlich ist, individuelle Positionen anzusteuern; alle Positionen der Röntgenquelle Q können simultan aktiv sein. Dieses erfordert jedoch, daß alle 32 Quellensegmente entsprechend Gl. 2 auf 32 individuelle Detektorsegmente in Y-Richtung abgebildet werden müssen, was allerdings keine notwendige, sondern nur vorteilhafte Bedingung ist. Es ist lediglich erforderlich, daß die Anzahl von Abtastzyklen pro gescannter Schicht multipliziert mit der Anzahl von Detektorsegmenten der Anzahl von Quellensegmenten gleicht. Deshalb muß die Detektoranordnung D nicht notwendigerweise dieselbe Anzahl von Segmenten wie die Röntgenquelle besitzt. Auf die erforderlichen Schaltungssequenzen für die Röntgenquelle wird nachfolgend eingegangen.

Beispielhaft wird angenommen, daß nur 4 Detektorelemente in Y-Richtung der segmentierten Detektoranordnung D verfügbar sind, was aufgrund der Größe des Detektors oder aus Kostengründen der Fall sein kann. Wie in der Tabelle 1 gezeigt, empfängt das Detektorsegment 1 Streustrahlung von den Quellen Q1, Q5 usw. , während Detektorsegment 2 Strahlung von den Quellen Q2, Q6 usw. registriert.

Tabelle 1

| Segment#1 | Q1, Q5, Q9, Q13, Q17, Q21, Q25, Q29 |
|---|---|
| Segment#2 | Q2, Q6.........................Q30 |
| Segment#3 | Q3, Q7.........................Q31 |
| Segment#4 | Q4, Q8.........................Q32 |

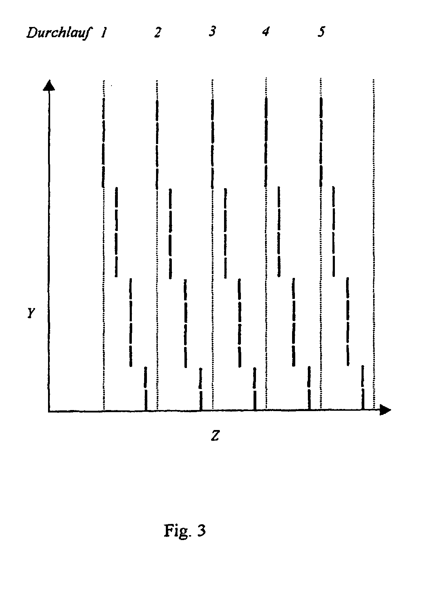

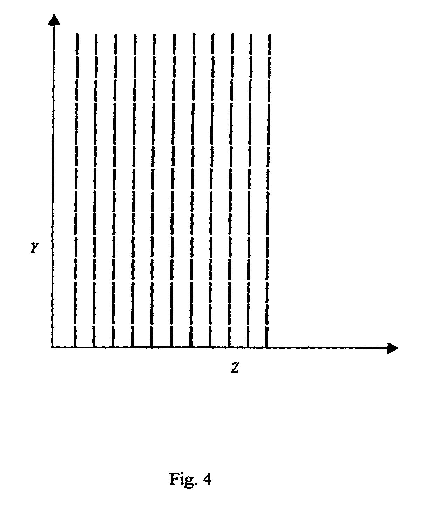

Daher wird in diesem Fall die Gesamtmeßzeit durch den Faktor 4 reduziert. Die Form der Voxel und ihre Lage, die der obigen Schaltsequenz entsprechen, sind in Figur 3 gezeigt. Da vier Quellensegmente parallel aktiviert sind, ist es möglich, vier Voxel im Objekt, beisp. Koffer simultan zu messen. Hieraus wird deutlich, daß die Detektorsegmentierung zu einer größeren Dichte von Meßdaten im Objekt führt. Alternative Schaltsequenzen für die Abtastung können entsprechend auch für andere Segmentierungen der Detektoranordnung D gefunden werden. Das Optimum ist natürlich dann gegeben, wenn die Detektoranordnung D genügend viele Elemente besitzt, so daß jede Röntgenquelle eindeutig einem Detektorelement zugeordnet ist. Alle R-Quellen sind dann simultan aktiv. Für diesen optimalen Fall ist die räumliche Verteilung der Streuvoxel in Figur 4 dargestellt.

Im Gegensatz zu dem älteren Konzept des "Multifokus CXRS" sind bei der erfindungsgemäßen "Simultan-Multifokus CXRS-Anordnung" mehrere Segmente der Strahlenquelle Q gleichzeitig aktiv. Die Gesamtmesszeit für ein Objekt läßt sich damit nur dann weiter reduzieren, wenn die Leistung der Strahlenquelle Q nicht reduziert werden muß, auch wenn Segmente des Röntgenstrahlers Q simultan aktiv sind. In dem älteren Konzept wurde gezeigt, daß bei konservativer Beurteilung die Röntgenröhre mit Temperaturen betrieben werden kann, die einer Dauerstrich-Leistung des Elektronenstrahls von 50 kW pro Segment entspricht, wenn jedes Segment nur für 500 µs angesteuert wird, wobei zugrundegelegt wurde, daß die tatsächliche (nicht projizierte) Größe des Fokus ca. 50 mm Länge (in Y-Richtung) und 1mm Breite (in Z-Richtung ) beträgt.

Aus der Literatur ist die (Leistungs-) Belastbarkeit einer Röntgenröhre mit stationärer Anode und elliptisch geformtem Fokus bekannt:

$$W_{stat} = 0.043\ (T_m\text{-}T_0)k\ \mu(\delta_1,\delta_2) \tag{3}$$

In Gleichung 3 stellen $T_m$ die Schmelztemperatur der Anode, $T_0$ die Umgebungstemperatur, $\kappa$ die Wärmeleitfähigkeit der Anode, $\delta_1$ und $\delta_2$ die Unter- und Haupt- Achsen der Ellipse und $\mu$ eine in der Literatur bekannte Funktion von $\delta_1$ und $\delta_2$ dar.

Für eine Wolframanode mit einer Dicke, die wesentlich größer als $\delta_1$ ist, resultiert eine Belastbarkeit von 10 kW für ein Segment von 50 mm Länge. Dieser Wert kann um einen Faktor 5 erhöht werden, indem die Dicke der Anode reduziert wird, z.B. indem man eine Wolframfolie als Anode verwendet.

Die Kühlung erfolgt deshalb vorteilhafterweise durch ein Flüssigmetall, dessen Fluß senkrecht zur Y-Richtung erfolgt. Mit einem Wärmekonvektionskoeffizienten für turbulentes Flüssigmetall von $10^6$ W m$^2$ K$^{-1}$ und einer Fläche von 50 mm$^2$ führt dieses zu einer Temperaturdifferenz von $\Delta T = 1000°$ für die Aufnahme der Wärmeenergie.

Selbst wenn die maximale Röntgenleistung auf ca. 10 kW beschränkt bliebe, führt die potentielle gleichzeitige Messung von Streustrahlung mit 32 Detektorsegmenten zu einem um den Faktor 32 verbesserten Signal, weshalb der mögliche Verlust eines Faktors 5 aufgrund reduzierter Röhrenleistung von untergeordneter Bedeutung ist.

Der Primärkollimator/Primärstrahlblendenanordnung P hat die Aufgabe, den Winkelbereich der Strahlung aus dem Röntgenstrahler Q so einzuschränken, daß die grundlegenden Beziehungen energiedispersiver Röntgenbeugung (konstanter Streuwinkel für jedes Detektorsegment) erfüllt werden. Die Winkelvariationen innerhalb der Ebene des Röntgenstrahles Q und senkrecht dazu, bleiben unverändert. Daher besteht keine Notwendigkeit, den Primärkollimator P in irgendeiner Weise für die erfindungsgemäße Simultan-Multifokus CXRS-Anordnung zu verändern.

Der Streukollimator/Sekundärstrahlblendenanordnung S muß mehrere Forderungen erfüllen, nämlich muß er eine eindeutige Beziehung zwischen der Z-Koordinate des Detektorelements und der Tiefenlage des Streuvoxels im Objekt herstellen, wie sie in Gl. 1 zum Ausdruck gebracht ist. Dieses wird erreicht, indem der Streuwinkel $\theta$ von Streustrahlung, die die Detektoranordnung D erreicht, entsprechend eingeschränkt wird (s. Gl. 1).

Im Gegensatz zu älteren Multifokus CXRS-Anordnung, muß der Streukollimator im erfindungsgemäßen Fall weiterhin die Y-Koordinate des Segments der Strahlenquelle Q, das gerade aktiv ist, entsprechend der Beziehung in Gl. 2 auf die Y-Koordinate der Detektoranordnung D abbilden.

Der Winkelbereich, den der Streukollimator S in Y-Richtung in die X-Y-Ebene transmittiert, steht in Beziehung zu der zu fordernden Ortsauflösung am Ort der Strahlenquelle Q. Es ist geplant, Segmente der Anode von 50 mm Länge zu aktivieren, was einer Länge der Streuvoxel im Objekt von ca. 30 mm entspricht. Als angemessene Bedingung für die zu fordernde örtliche Auflösung an der Strahlenquelle Q wird $\Delta Y_{Quelle} \leq 10\%$ x 50 mm d.h. $\Delta Y_{Quelle} \leq 5$ mm angenommen. Damit sind die Streuvoxel mit einer örtlichen Genauigkeit von ca. 3mm definiert.

Diese Bedingung wird durch die Geometrie der älteren Multifokus CXRS-Anordnung erfüllt, wo gezeigt wird, daß die X-Koordinate des am nächsten am Objekt liegenden Abbildungsschlitzes 1345 mm beträgt (Abstand von $Q_0$).

Der Objektraum verläuft von 400 mm bis 1050 mm, gemessen von $Q_0$. Daher sind wenigstens 250 mm (1345 mm- 1050 mm) Raum zwischen dem Ende des Objektraumes und dem ersten Abbildungsschlitz, was auch noch genügend Platz für das Förderband läßt.

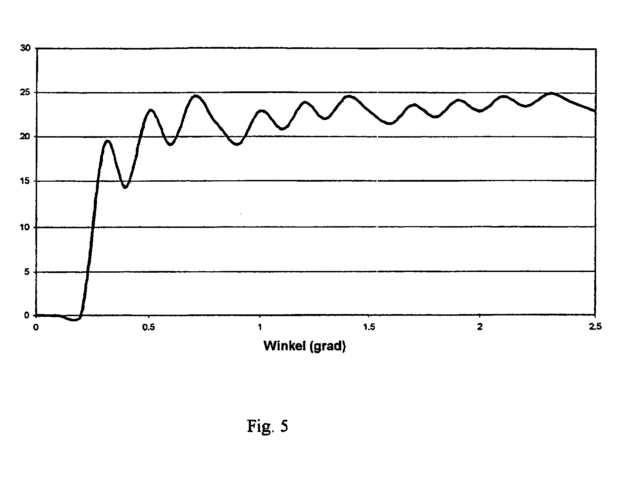

Es ist lediglich notwendig, einen eindimensionalen Vielkanal-Kollimator zwischen dem Ende des Objektbereiches und dem letzten Abbildungsschlitz für die Streustrahlung einzufügen, wie es in Figur 2 dargestellt wird. Die Höhe dieses Kollimators in X-Richtung beträgt ca. 250 mm und hat zur Folge, daß die Strahlungsabschwächung außerhalb seines Winkelbereiches sehr effektiv ist. Diese Wirkung wird in Figur 5 für einen 250 mm hohen Kollimator mit 100 $\mu$m dicken Stahlwänden aufgezeigt. Die Oszillationen werden durch die Änderung der Anzahl von Wänden hervorgerufen, die ein Strahl durchdringt (nimmt mit zunehmendem Winkel zu) sowie durch die Dicke der Wände (nimmt mit zunehmendem Winkel ab).

Überraschenderweise hat sich nun gezeigt, daß es möglich ist, beide Funktionen (d.h. Auswahl eines Segments der Anode und einer Voxeltiefe im Objekt) des Streukollimators in einem zweidimensionalen Kollimator zu vereinen.

Der Streukollimator S kann in seiner Gesamtheit durch eine zweidimensionale Anordnung realisiert werden. Die Kanäle in der Z-Richtung sind parallel zueinander (s. Figur 2) und sind entsprechend der Breite der Detektorelemente (1.76 mm) voneinander beabstandet. Die Funktion des Streukollimators in dieser Richtung besteht darin, das jeweilige Detektorsegment mit einer Tiefenlage im Objekt zu verbinden, in der ein gewisses Streuvoxel analysiert werden soll. In der Y-Richtung laufen die Kanäle auf den Punkt O zu, ohne daß dieser Punkt jedoch physikalisch eine Rolle spielt. Derartige zweidimensionale Kollimatoren sind aus z.B. aus dem US-Patent 5,949,850 von Cha-Mei Tang, sowie dort zitierte Referenzen bekannt, sowie im Handel erhältlich (z.B. Creative MicroTech, Internetseite http://www.creatvmicrotech.com/). Sie finden z.B. bei Kegelstrahl-CT Anwendung, um dafür zu sorgen, daß der Detektor selektiv durch Transmissionsstrahlung bestrahlt und die ihn treffende Streustrahlung unterdrückt wird.

Die Detektoranordnung D muß für die erfindungsgemäße Simultan-Mutlifokus CXRS-Anordnung wie bisher energieauflösend sein, wobei vorteilhafterweise ein Germaniumdetektor zum Einsatz kommt. Dieser liefert eine Energieauflösung im Bereich $\Delta E / E$ - 1.5 % mit einer Detektionseffizienz von ca. 75 % bei 100 keV. Die physikalischen Abmessungen des Kristalls liegen bei 10 mm Dicke und 90 mm nutzbarem Durchmesser.

Die Detektoranordnung D muß in Z-Richtung segmentiert sein, womit bei angenommenem konstantem Streuwinkel $\theta$ die geforderte Ortsauflösung in X-Richtung erreicht wird. Die Detektorelemente haben dann eine Breite von 1.765 mm. Insgesamt gibt es 14 Detektorelemente, die eine Länge in Z-Richtung von ca. 25 mm haben. Das größte Rechteck mit einer Seitenlänge von 25 mm das von einem Kreis mit 90 mm Durchmesser umschrieben werden kann ergibt sich aus elementargeometrischer Betrachtung zu:

$$A^2 = 45^2 - 12.5^2 \tag{4}$$

wobei die Seitenlänge 2 A beträgt. Nach dieser Gleichung resultiert für 2A der Wert 86 mm. Dieses ist somit die Größe des Rechtecks für die Abbildung der Anode der Strahlenquelle.

Im Gegensatz zur älteren Multifokus CXRS Geometrie muß die Detektoranordnung auch in Y-Richtung segmentiert werden. Hierdurch wird es möglich, Streusignale aus den Positionen der Strahlenquelle $Q_0$, $Q_n$ etc. getrennt aufzunehmen. In der älteren Anordnung wurde gezeigt, daß die Länge der Detektorelemente in Y-Richtung auf ca. 10 mm beschränkt werden muß, damit die gewünschte Konstanz des Streuwinkels ($\Delta\theta/\theta \sim$ 1.5 %) erreicht werden kann. Unter Berücksichtigung der geringfügig reduzierten Länge der neuen, erfindungsgemäßen Anordnung (s.u.) entspricht dieses nunmehr einem Wert von 8 mm. Vorstehend (Gl. 4) wurde eine verfügbare Länge des Segments in Y-Richtung von 86 mm abgeleitet, was ungefähr 11 separaten Fokuspositionen entspricht, die mit 8 mm langen Segmenten aufgelöst werden können.

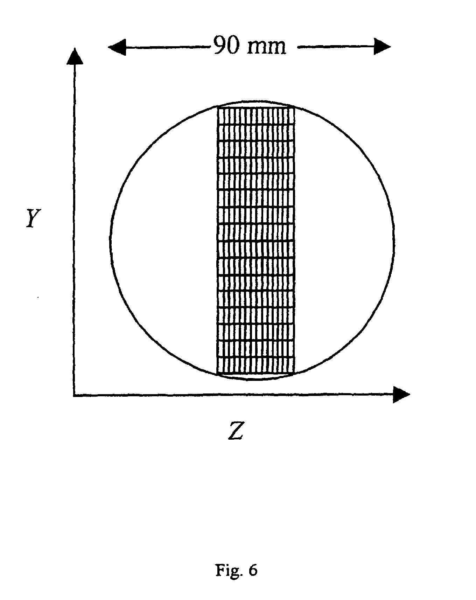

Wenn alle 32 Quellensegmente unterscheidbar sein sollen, dann sind 86 / 32 = 2.7 mm pro Quellensegment auf der Detektoranordnung verfügbar. Alternativ wären 16 Quellensegmente an der Detektoranordnung unterscheidbar, wenn jedes Quellensegment 5.7 mm belegt. Dieses ist ein guter Kompromiß zwischen der Wirksamkeit, mit der ein einzelnes Segment benutzt wird, und der Anzahl der verfügbaren Segmente. Eine Darstellung der Detektoranordnung entlang der X-Achse gesehen ist in Figur 6 wiedergegeben. Es gibt dort insgesamt 14 x 16 = 224 Elemente, was eine beträchtliche Herausforderung an die Ausleseelektronik der Detektoranordnung darstellt (s.u.).

Aus Figur 2 ist ersichtlich, daß es im Gegensatz zur älteren Multifokus CXRS-Anordnung nicht mehr nötig ist, daß der Punkt O physikalisch realisiert ist. Der Detektor befindet sich nun in einem Abstand $X_{det}$ von $Q_0$ entlang der *X* Achse, der die Bedingung erfüllt:

$$X_{det} = 2150 \text{ mm} \times ( 1 - 86 \text{ mm} / 1550 \text{ mm}) \tag{5}$$

Aus Gleichung 5 resultiert ein Wert für $X_{det}$ von ca. 2000 mm. Außerdem folgt, da die Änderung in der Position der Detektoranordnung nur ca. 10% des Abstandes zwischen Objekt und Detektoranordnung beträgt, daß die geometrischen Parameter (Schlitzbreiten, Breite des Fächerstrahles usw.) der älteren Anordnung ihre Gültigkeit behalten.

Chip-basierende Zählelektroniken für segmentierte Halbleiter-Gammastrahlendetektoren sind im Stand der Technik bekannt (siehe Medipix 2 ASIC, http://medipix.web.cern. ch/MEDIPIX/). Sie basieren auf der Messung der freigesetzten Ladung, die von der Detektoranordnung über eine Verbindung (üblicherweise aus Indiummaterial) in eine Eingangsstufe eines in Bildelemente aufgeteilten CMOS Chips fließt, der simultane Zähleinheiten in einer 64 x 64 Matrix besitzt und daher mehr Kanäle aufweist als für den hier vorgeschlagenen Detektor erforderlich sind (16 x 14 Kanäle). Jedes Pixel auf dem Auslesechip hat seine eigene spektroskopische Auswertekette bestehend aus ladungsempfindlichen Vorverstärker, Filter (Shaper) und Komparator mit einem 15 Bit tiefen Ausgabe-Pufferspeicher.

Eine alternative Lösung ist im Internet unter der Adresse *http://gamma.radiology.arizona.edu/researchprojects/semiconductor.html* nachzusehen.

Danach besteht der Schaltkreis aus drei Hauptkomponenten. Ein Transimpedanzverstärker mit kapazitiver Rückkopplung (CFTA) integriert die Ladung des Detektors in einem Kondensator, dessen Kapazität wesentlich kleiner ist als die Eingangkapazität eines Pixels und der daher ein hohes Ausgangssignal erzeugt. Zweitens tastet ein korrelierter doppelter "Sample-und-Hold" Schaltkreis das CFTA Ausgangssignal ab und speichert den Wert in einem Kondensator, ausgelöst durch ein Reset-Signal. Schließlich erlaubt ein Multiplexer die sequentielle Ableitung der Kondensatorspannungen auf einen schnellen Analog-Digital-Wandler (ADC), wodurch 64 x 64 x 256 Spektrenkanäle aufakkumuliert werden können. Es ist klar, daß in diesem Fall die Zählrate stärker begrenzt ist.

Diese Lösungen bieten nicht ganz die gleiche Leistungsfähigkeit einer diskreten spektroskopischen Zählerkette, aber dieses ist in der CXRS Anwendung nicht unbedingt erforderlich, da dort die Energieauflösung bescheiden ist ( > 1%).

Zusammenfassend stellt die Erfindung also eine Variante der Simultan-Multifokus CXRS-Anordnung vor, die zu einer bedeutenden Verbesserung der Scangeschwindigkeit führen kann, da alle Foki der Strahlenquelle simultan aktiviert werden können. In der fortgeschrittensten Konfiguration vermeidet sie vollständig die Notwendigkeit einer Hochspannungselektronik zur Adressierung der Kathode der Röntgenröhre und als weiterer Vorteil erlaubt sie eine bescheidene Reduktion der Gesamtlänge der Anordnung. Sie führt zu einer vollständigeren Erfassung des Objektvolumens und verringert im Vergleich zum ursprünglichen Konzept die Gefahr, dünne Folien zu verpassen.

Die primären und sekundären (Streu-) Kollimatoren P,S können erfindungsgemäß mit wenig technischem Zusatzaufwand realisiert werden. Die bedeutendsten Änderungen betreffen die Detektoranordnung, die nun zweidimensional segmentiert ist (z.B. 32 x 14 Elemente) sowie die Röntgenquelle Q, die vorteilhaft eine fortgeschrittene Kühlung mit Flüssigmetall besitzt, um die hohe Wärmeleistung abzuführen.

Aufgrund der Vorteile, die die erfindungsgemäße Simultan-Fokus CXRS-Anordnung aufweist, erscheint ihre Anwendung dort sinnvoll zu sein, wo die Scangeschwindigkeit der älteren Multifokus-CXRS-Anordung erhöht oder die Detektionsrate bei konstanter Meßzeit verbessert werden muß.

**Patentansprüche**

1. Anordnung zum Messen des Impulsübertragungsspektrums von in einem Untersuchungsbereich (U) für Behältnisse elastisch gestreuten Röntgenquanten, mit einem auf der einen Seite des Untersuchungsbereichs (U) angeordneten polychromatischen Röntgenstrahler (Q) und einer auf der anderen Seite des Untersuchungsbereichs (U) befindlichen, die Energie der gestreuten Röntgenquanten messenden Detektoranordnung (D) sowie mit einer Primärstrahlenblendenanordnung (P) und einer Sekundärstrahlblendenanordnung (S), die nur Streustrahlung innerhalb eines bestimmten Streuwinkelbereichs um den Streuwinkel $\theta$ zur Detektoranordnung (D) durchläßt, von denen die Primärstrahlenblendenanordnung (P) zwischen dem Untersuchungsbereich und dem Röntgenstrahler (Q) und die Sekundärstrahlblendenanordnung (S) zwischen dem Untersuchungsbereich (U) und der Detektoranordnung (D) angeordnet ist, wobei die Detektoranordnung (D) mit Mitteln zur Verarbeitung der gemessenen Signale ausgestattet ist, und die Primärstrahlblendenanordnung (P) nur Röntgenstrahlen durchläßt, die im wesentlichen auf den Punkt O gerichtet sind, wobei der Punkt O auf der Z-Achse liegt und den Ursprungspunkt für ein kartesisches Koordinatensystem mit X- und Y-Achse festlegt, wobei die Primärstrahlen in der X,Y-Ebene verlaufen und die Förderachse für das zu untersuchende Behältnis parallel zur Z-Achse verläuft,
**dadurch gekennzeichnet, daß**
die Detektoranordnung (D) eine 2-D Segmentierung in der Y,Z-Ebene aufweist und vor der Z-Achse liegt und daß der Röntgenstrahler (Q) mit einer ausgedehnten Anode **ausgestattet** ist, die über ihre Fläche entweder vollständig oder teilweise gleichzeitig Strahlen emittiert, und daß die Sekundärstrahlblendenanordnung (S) in der X-Richtung auf O konvergierend und in der X,Z-Ebene um den Winkel $\theta$ zur X-Achse derart verläuft, daß die Y und X Position des Streuvoxels im Behältnis auf die Y- und Z-Dimensionen der Detektoranordnung (D) kodiert werden und daß der Röntgenstrahler (Q) auf einer Zylinderfläche um die Z-Achse oder linear parallel zur Y-Achse in der X,Y-Ebene verläuft .

2. Anordnung nach Anspruch 1, **dadurch gekennzeichnet, daß** die Detektoranordnung (D) die die im Untersuchungsbereich entstehende Streustrahlung erfaßt, aus halbleitendem Material wie Germanium, Kadmium Zink Tellurid (CdZnTe) hergestellt ist und aus rechteckigen Segmenten mit Breiten in der Y-Richtung von 0,5 mm bis 2 mm und in der Z-Richtung mit Längen zwischen 5 und 15 mm besteht und eine Gesamtanzahl von Segmenten zwischen 50 und 500 aufweist.

3. Anordnung nach Anspruch **1 oder 2, dadurch gekennzeichnet, daß** die Detektoranordnung (D) aus einem Ge-Einkristall mit einem Durchmesser zwischen 90 mm bis 110 mm hergestellt ist und einen rechteckigen nutzbaren Bereich mit ca. 90 mm Höhe und ca. 25 mm Breite aufweist.

4. Anordnung nach Anspruch **1, 2 oder 3, dadurch gekennzeichnet, daß** die Detektoranordnung (D) vom Punkt O ca. 150 mm entfernt ist.

5. Anordnung nach Anspruch 2, 3 oder 4, **dadurch gekennzeichnet, daß** jedes Segment **der Detektoranordnung (D) ein Mittel zur Pulshöhenspektrumanalyse aufweist.**

6. Anordnung nach **einem der Ansprüche 1 bis 5, dadurch gekennzeichnet, daß** sich an dem Punkt O entweder ein Detektor (D) zur Messung der Durchlaßstrahlung oder eine Lochblende befindet, durch die die Durchlaßstrahlung auf einer röntgenstrahlempfindlichen Detektorzeile registriert wird, wobei die Detektorzeile aus einer Vielzahl (etwa 512) von Detektorelementen besteht und daß die Detektorzeile parallel zur Y-Achse liegt.

7. **Anordnung nach einem der Ansprüche 1 bis 6, dadurch gekennzeichnet, daß** die Sekundärblendenanordnung aus einer zweidimensionalen Anordnung von Lamellen aus röntgenstrahlabsorbierendem Material wie Cu besteht, wobei sich die **gedachten Verlängerungen der** Lamellen in der X-Richtung in dem Punkt O schneiden und eine Länge in der X-Richtung zwischen 100 und 300 mm haben und in der X,Z-Ebene parallel zueinander und mit einem Winkel zur X-Achse zwischen 0,02 und 0,06 Radian verlaufen.

8. Anordnung nach **einem der Ansprüche 1 bis 7, dadurch gekennzeichnet, daß** die Primärstrahlblendenanordnung (P) aus mehreren Lamellen aus röntgenstrahlabsorbierendem Material wie Cu besteht, wobei die gedachten Vorlängerungen der Lamellen sich in der Z-Achse schneiden, eine Strahlendivergenz in der X-Y-Ebene von 0,2 bis 0,6°, insbesondere 0,4° zulassen, eine Länge in der X-Richtung zwischen 100 und 300 mm und einen maximalen Winkel in der X-Y-Ebene von der X-Achse von $\pm$ 20° haben.

9. Anordnung nach einem der Ansprüche 1 bis 8, **dadurch gekennzeichnet, daß** die ausgedehnte Anode eine Länge in der Y-Richtung von 1 bis 2 m, insbesondere 1,5 m besitzt, wobei über diese Länge ein Elektronenstrahl ablenkbar oder der Röntgenstrahler (Q) mit einer Anzahl von zwischen 1 und 8 einzelnen Kathoden versehen ist, die nebeneinander angeordnet sind und ggf. nach einem Sequenzmuster einschaltbar sind, wobei die Fokuslänge auf der Anode 200 mm bis 1500 mm in der Y-Richtung und effektive Fokusbreite in der Z-Richtung 0,2 mm beträgt, und daß die Verweilzeit für jede eingeschaltete Fokusposition 200 bis 2000 µsec beträgt.

10. Anordnung nach **einem der Ansprüche 1 bis** 9, **dadurch gekennzeichnet, daß** die aus Wolfram oder Gold bestehende feste Anode mit Kühlmittel wie Wasser, Oel oder flüssigem Metall wie GaInSn kühlbar ist.

11. Verwendung der Anordnung nach einem **oder** mehreren der vorstehenden Ansprüche **1 bis 10** zur Untersuchung von Sprengstoff, Waffen oder Drogen enthaltenden Behältnissen, wie beispielsweise Gepäckstücken, Paketen, Taschen.

## Claims

1. A system for measuring the pulse transmission spectrum of X-ray quanta that are elastically scattered in an examination region (U) for containers, comprising a polychromatic X-ray emitter (Q) arranged on one side of the examination region (U) and a detector array (D) that is located on the other side of the examination region (U) and measures the energy of the scattered X-ray quanta, further comprising a primary beam diaphragm arrangement (P) and a secondary beam diaphragm arrangement (S) which lets only scattered radiation within a specific scattering angle range around the scattering angle Θ through to the detector array (D); the primary beam diaphragm arrangement (P) being arranged between the examination region and the X-ray emitter (Q), and the secondary beam diaphragm arrangement (S) being arranged between the examination region (U) and the detector array (D); the detector array (D) being equipped with means for processing the measured signals, and the primary beam diaphragm arrangement (P) letting pass through only X-rays that are essentially directed to point O; the point O lying on the Z-axis and defining the origin for a Cartesian coordinate system with X- and Y-axes; the primary beams propagating in the X, Z-plane and the conveying axis for the container to be examined running parallel to the Z-axis, **characterized in that** the detector array (D) has a 2-D segmentation in the Y, Z-plane and is located in front of the Z-axis; and **in that** the X-ray emitter (Q) is equipped with an extended anode that emits beams of radiation over its surface area either completely or partially simultaneously; and **in that** the secondary beam diaphragm arrangement (S) extends in the X-direction in such a manner that it converges to O and in the X, Z-plane at an angle Θ with respect to the X-axis such that the Y and X positions of the scattering voxel in the container are encoded onto the Y- and Z-dimensions of the detector array (D); and **in that** the X-ray emitter (Q) extends on a cylindrical surface around the Z-axis or linearly parallel to the Y-axis in the X,Y-plane.

2. The system as recited in Claim 1,
**characterized in that** the detector array (D) measures the scattered radiation produced in the examination region, is composed of semiconducting material such as germanium, cadmium zinc telluride (CdZnTe) and made up of rectangular segments having widths in the Y-direction of 0.5 mm to 2 mm and lengths between 5 and 15 mm in the Z-direction, and has a total number of segments between 50 and 500.

3. The system as recited in Claim 1 or 2,
**characterized in that** the detector array (D) is manufactured from a Ge single crystal having a diameter between 90 mm to 110 mm and has a rectangular useful region with a height of about 90 mm and a width of about 25 mm.

4. The system as recited in Claim 1, 2 or 3,
**characterized in that** the detector array (D) is located at a distance of about 150 mm from the point O.

5. The system as recited in Claim 2, 3 or 4,
**characterized in that** each segment of the detector array (D) has a means for pulse height spectrum analysis.

6. The system as recited in one of the Claims 1 through 5,
**characterized in that** at point O, there is located either a detector (D) for measuring the radiation passing through, or a pinhole diaphragm via which the radiation that passes through is recorded on an X-ray sensitive detector line, the detector line being composed of a plurality (about 512) of detector elements, and **in that** the detector line is parallel to the Y-axis.

7. The system as recited in one of the Claims 1 through 6,
**characterized in that** the secondary beam diaphragm arrangement is composed of a two-dimensional arrangement of blades which are made of X-ray absorbing material, such as Cu, in connection with which the imaginary extensions of the blades intersect at point O in the X-direction, have a length in the X-direction between 100 and 300 mm, and which extend parallel to each other in the X, Z-plane and at an angle between 0.02 and 0.06 radian with respect to the X-axis.

8. The system as recited in one of the Claims 1 through 7,
**characterized in that** the primary beam diaphragm arrangement (P) is composed of a plurality of blades which are made of X-ray absorbing material, such as Cu, in connection with which the imaginary extensions of the blades intersect each other in the Z-axis, allow a beam divergence in the X, Y-plane of 0.2 to 0.6°, in particular, 0.4°, and which have a length in the X-direction between 100 and 300 mm and a maximum angle from the X-axis of $\pm$ 20° in the X, Y-plane.

9. The system as recited in one of the Claims 1 through 8,
**characterized in that** the extended anode has a length in the Y-direction of 1 to 2 m, in particular 1.5 m, over which length an electrode beam can be deflected, or the X-ray emitter (Q) is provided with a number of between 1 and 8 individual cathodes that are arranged side-by-side and can optionally be activated in a sequential pattern; the focal length on the anode being 200 to 1500 mm in the Y-direction and the effective focal width in the Z-direction being 0.2 mm; and **in that** the dwell time for each activated focus position is 200 to 2000 μsec.

10. The system as recited in one of the Claims 1 through 9,
**characterized in that** the fixed anode, which is composed of tungsten or gold, can be cooled with a coolant, such as water, oil, or liquid metal such as GaInSn.

**11.** The use of the system as recited in one or more of the preceding Claims 1 through 10 for examining containers, such as baggage items, parcels, bags, containing explosives, weapons, or drugs.

**Revendications**

**1.** Disposition pour mesurer le spectre de transfert d'impulsions des quanta des rayons X diffusés de façon élastique une zone d'inspection (U), avec un émetteur de rayons X (Q) polychromatique disposé sur un des côtés de la zone d'inspection (U) et avec une disposition de détecteur (D) mesurant l'énergie des bords de rayons X diffusés se trouvant sur l'autre côté de la zone d'inspection (U) ainsi avec une disposition de diaphragme de rayons primaires (P) et une disposition de diaphragme de rayons secondaires (S), qui laisse passer uniquement vers la disposition de détecteur (D) le rayonnement diffusé à l'intérieur d'une zone d'angle de diffusion déterminée selon l'angle θ de diffusion, la disposition de diaphragme de rayons primaires (P) est disposée entre la zone d'inspection et l'émetteur de rayons X (Q) et la disposition de diaphragme de rayons secondaires (S) entre la zone d'inspection (U) et la disposition de détecteur (D) ; la disposition de détecteur (D) étant équipée avec des moyens pour traiter les signaux mesurés et la disposition de diaphragme de rayons primaires (P) ne laissant passer que des rayons X qui sont orientés essentiellement vers le point O ; le point O étant situé sur l'axe Z et déterminant le point d'origine pour un système de coordonnées cartésiennes avec l'axe X et Y ; les rayons primaires s'étendant dans le plan X-Y et l'axe de transport s'étendant de façon parallèle par rapport à l'axe Z pour le récipient à examiner,
**caractérisé en ce que**,
la disposition de détecteur (D) présente une segmentation en 2-D dans le plan Y, Z et se situe devant l'axe Z et **en ce que** le rayon X (Q) est équipé d'une anode élargie qui émet soit complètement ou partiellement de façon simultanée et **en ce que** la disposition de diaphragme de rayons secondaires (S) s'étend dans la direction X convergeant vers O et dans le plan X-Z selon l'angle θ par rapport à l'axe X de façon à ce que la position Y et X du voxel de diffusion sont codés dans le récipient aux dimensions Y- et Z de la disposition de détecteur (D) et **en ce que** l'émetteur de rayons X (Q) s'étend sur la surface de cylindre autour de l'axe Z ou de façon linéaire et parallèle par rapport à l'axe Z dans le plan X, Y.

**2.** Disposition selon la revendication 1, **caractérisée en ce que** la disposition de détecteur (D) qui détecte le rayonnement diffusé apparaissant dans la zone d'inspection, est fabriquée dans un matériau semi-conducteur, comme le germanium, le tellurure de cadmium et de zinc (CdZnTe) et est constitué de segments rectangulaires avec des largeurs dans la direction-Y de 0,5 mm à 2 mm et dans la direction Z avec des longueurs comprises entre 5 et 6 mm et présente un nombre total de segments entre 50 et 500.

**3.** Disposition selon la revendication 1 ou 2, **caractérisée en ce que** la disposition de détecteur (D) est fabriquée dans un monocristal de germanium avec un diamètre compris entre 90 mm de hauteur et environ 25 mm de largeur.

**4.** Disposition selon la revendication 1, 2 ou 3, **caractérisée en ce que** la disposition de détecteur (D) est éloignée du point O d'environ 150 mm.

**5.** Disposition selon la revendication 2, 3 ou 4, **caractérisée en ce que** chaque segment de la disposition de détecteur (D) présente un moyen pour l'analyse des hauteurs des impulsion.

**6.** Disposition selon une des revendications 1 à 5, **caractérisée en ce qu'**au point O, on trouve soit le détecteur (D) pour mesurer le rayonnement de passage ou un diaphragme perforé par lequel le rayonnement de passage est enregistrée sur une ligne de détecteur sensible aux rayons X et **en ce que** la ligne de détecteur se situe de façon parallèle à l'axe Y.

**7.** Disposition selon une des revendications 1 à 6, **caractérisée en ce que** la disposition à diaphragmes secondaires est constituée d'une disposition à deux dimensions de lamelles dans un matériau absorbant les rayons X comme le cuivre ; les prolongations imaginaires des lamelles s'intersectant dans la direction X au point O et ayant une longueur dans la direction X comprise entre 100 et 300 mm et s'étendant dans le plan X- Z de façon parallèle l'une par rapport à l'autre et avec un angle par rapport à l'axe X compris entre un radian de 0,02 et de 0,06.

**8.** Disposition selon une des revendications 1 à 7, **caractérisée en ce que** la disposition de rayons primaires (P) est constituée de plusieurs lamelles dans un matériau absorbant les rayons X, comme le cuivre ; les prolongations imaginaires des lamelles s'intersectant dans l'axe Z, permettant une divergence de rayons dans le plan X-Y de 0,2 à 0,6, notamment 0,4° et ayant une longueur dans la direction X comprise entre 100 et 300 mm et un angle maximal dans le plan X-Y de +/- 20° par rapport à l'axe X.

9. Disposition selon une des revendications 1 à 8, **caractérisée en ce que** l'anode élargie comprend une longueur dans la direction-Y de 1 à 2 m, notamment 1,5 ; un rayon d'électrons étant susceptible d'être dévié sur cette longueur de façon ou l'émetteur de rayons X (Q) étant pourvu d'un nombre de cathodes individuelles 1 à 8, qui sont disposées l'une à côté de l'autre et si besoin est, sont susceptibles d'être activées selon un modèle séquentiel ; la longueur de foyer s'élevant sur l'anode de 200 mm à 1500 mm dans la direction-Y et la largeur de foyer dans la direction Z s'élevant à 0,2 mm et **en ce que** le temps de séjour s'élève pour chaque position de foyer activée pour 200 jusqu'à 2000 μsec.

10. Disposition selon une des revendications 1 à 9, **caractérisée en ce que** l'anode solide en wolfram ou en or peut être refroidie avec un moyen de refroidissement, comme de l'eau, de l'huile ou un métal liquide, comme GaInSn.

11. Utilisation de la disposition selon une ou plusieurs des revendications précédentes 1 à 10 pour examiner des récipients contenant des explosifs, des armes ou de la drogue, comme, par exemple, des bagages, des paquets, des sacs.

y Achse

$Q_n$

$Q_i$

$Q_0$

X Achse

Primärstrahlen-/
Blendenanordnung P

Untersuchungs-/
Abtastbeich U

konvergierende 2D
Sekundärstrahlblendenanordnung S

● O

Röntgenstrahler Q

Behältnis
mit
Gegenstand

2D Ge
Detektoranordnung D

Fig. 1

$X$ Achse

$Z$ Achse

O

Untersuchungs- /Abtastbereich U

Detektor – anordnung D

Röntgen- strahler Q

Behältnis mit Gegenstand

Fig. 2

Fig. 3

Fig. 4

Fig. 5

Fig. 6